# EUROPÄISCHE PATENTANMELDUNG

(11) **EP 1 992 212 A1**
(43) Veröffentlichungstag der Anmeldung: **19.11.2008**
(21) Anmeldenummer: 08102755.9
(22) Anmeldetag: 19.03.2008
(51) Int. Cl.: A01D 34/00

(54) **Zum selbständigen Betrieb ausgebildetes Roboterfahrzeug**

(30) Priorität: 16.05.2007 DE 102007023156
(71) Anmelder: Robert Bosch GmbH, 70442 Stuttgart (DE)
(72) Erfinder: Biber, Peter, 72070, Tuebingen (DE); Koch, Christoph, 70178, Stuttgart (DE)

(57) **Zusammenfassung**

Die Erfindung betrifft für einen selbstständigen Betrieb ausgebildetes Roboterfahrzeug (1), mit Antriebsmitteln (6) zum Lenken und Bewegen des Roboterfahrzeugs (1) auf einem Untergrund (11) und mit Steuermitteln (7) zum Ansteuern der Antriebsmittel (6) in Abhängigkeit von Signalen mindestens einer ersten Sensoreinheit (8a bis 8e) und mindestens einer zweiten Sensoreinheit (8a bis 8e), wobei die erste Sensoreinheit (8a bis 8e) zum Empfangen mindestens eines von dem unterhalb des Roboterfahrzeugs (1) befindlichem Untergrund (11) reflektierten ersten Frequenzsignals ausgebildet und angeordnet ist. Erfindungsgemäß ist vorgesehen, dass die zweite Sensoreinheit (8a bis 8e) zum Empfangen mindestens eines Frequenzsignals ausgebildet und angeordnet ist, das von außerhalb der Roboterfahrzeugumfangskontur (10) befindlichem Untergrund (11) reflektiert wird.

## Beschreibung

### Stand der Technik

Die Erfindung betrifft ein für einen selbständigen Betrieb ausgebildetes Roboterfahrzeug gemäß dem Oberbegriff des Anspruchs 1.

Aus der DE 199 32 552 A1 ist ein autonom arbeitender Rasenmäher bekannt, der auf seiner Unterseite in Querrichtung des Rasenmähers zwei nebeneinander angeordnete Sensoreinheiten zum Erfassen von unterhalb des Roboterfahrzeugs befindlichem Untergrund reflektierter Infrarotstrahlung aufweist. Auf Basis von Messsignalen der Sensoreinheiten erkennt eine Steuereinheit, ob sich der Rasenmäher auf bereits geschnittener oder noch nicht geschnittener Rasenfläche befindet. Nachteilig bei dem bekannten Roboterfahrzeug ist, dass das Steuermittel nicht erkennen kann, ob sich eine Grenze zwischen zwei unterschiedlichen Untergrundabschnitten benachbart zu dem Roboterfahrzeug befindet.

Aus der EP 1 704 766 A1 ist ein selbständig arbeitender Rasenmäher mit mehreren quer zur Fahrtrichtung angeordneten Sensoreinheiten bekannt, wobei die Sensoreinheiten zum Erfassen von Infrarotstrahlung ausgebildet und angeordnet sind, die auf einem etwa 30 cm vor dem Roboterfahrzeug befindlichen Untergrund reflektiert wird. Nachteilig bei dem bekannten Rasenmäher sind die Fremdlichteinflüsse auf die Messung der Sensoreinheiten. Ferner ist nachteilig, dass mit der bekannten Sensoreinheitsanordnung keine Aussage darüber getroffen werden kann, wie der Untergrund beschaffen ist, auf dem sich der Rasenmäher unmittelbar befindet.

### Offenbarung der Erfindung

### Technische Aufgabe

Der Erfindung liegt die Aufgabe zugrunde, ein für ein selbständigen Betrieb ausgebildetes Roboterfahrzeug vorzuschlagen, dessen Steuermittel eine im Bereich der Außenkontur des Roboterfahrzeugs befindliche Grenze zwischen zwei unterschiedlich beschaffenen Untergrundabschnitten zuverlässig erkennen können.

### Technische Lösung

Diese Aufgabe wird mit den Merkmalen des Anspruchs 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen.

Der Erfindung liegt der Gedanke zugrunde, mindestens zwei Sensoreinheiten vorzusehen, wobei eine erste Sensoreinheit derart ausgebildet und angeordnet ist, dass mit dieser der unmittelbar unterhalb des Roboterfahrzeugs befindliche Untergrund analysierbar ist und wobei eine zweite Sensoreinheit derart ausgebildet und angeordnet ist, dass mit ihr der außerhalb der Roboterfahrzeugsumfangskontur, d.h. der außerhalb der Projektionsfläche des Roboterfahrzeugs befindliche Untergrund analysierbar ist.

Somit ist es möglich, auch eine Grenze zwischen zwei unterschiedlich beschaffenen Untergrundabschnitten zu erkennen, die im Bereich der Roboterfahrzeugsumfangskontur verläuft. Werden zwei identisch ausgebildete Sensoreinheiten zur Analyse des Untergrundes unmittelbar unterhalb des Roboterfahrzeugs und des Untergrundes außerhalb und insbesondere unmittelbar benachbart zur Roboterfahrzeugsumfangskontur vorgesehen, kann das erfinderische Konzept dadurch realisiert werden, dass die Sensoreinheiten winklig zueinander angeordnet sind, insbesondere derart dass sich ein Sensorfleck (Messfläche) der ersten Sensoreinheit, also der Bereich des Untergrundes aus dem reflektierte Frequenzsignale erfasst werden können, innerhalb der Roboterfahrzeugumfangskontur (Projektionsfläche), also unmittelbar unterhalb des Roboterfahrzeuges befindet und ein Sensorfleck der zweiten Sensoreinheit zumindest abschnittsweise, vorzugsweise vollständig, außerhalb der Roboterfahrzeugsumfangskontur.

Es liegt im Rahmen der Erfindung, dass die Sensoreinheiten jeweils einen einzigen Sensor oder jeweils mehrere Sensoren umfassen, wobei die Sensoren einer Sensoreinheit gleich oder unterschiedlich ausgebildet sein können. So ist es beispielsweise denkbar, dass jede Sensoreinheit ausschließlich einen Infrarotsensor, insbesondere zum Erfassen von Infrarotstrahlung aus dem nahen Infrarotspektrum aufweist. Ebenso ist es möglich, dass die Sensoreinheiten jeweils einen Infrarotsensor und jeweils einen Lichtsensor zum Erfassen von Licht aus dem sichtbaren Spektrum umfassen. Ebenso ist es denkbar, Ultraschallsensoren einzeln der in Kombination mit anderen Sensoren in jeweils einer Sensoreinheit anzuordnen.

Ferner liegt es im Rahmen der Erfindung mehrere erste Sensoreinheiten vorzusehen, mit denen jeweils der unterhalb des Roboterfahrzeuges befindliche Untergrund analysierbar ist. Bevorzugt sind mehrere erste Sensoreinheiten auf einer Querachse des Roboterfahrzeugs nebeneinander angeordnet, beispielsweise im Bereich der Roboterfahrzeugfront. Ebenso fällt es in den Rahmen der Erfindung mehrere zweite Sensoreinheiten zur Analyse des außerhalb der Roboterfahrzeugskontur befindlichen Untergrundes vorzusehen, wobei beispielsweise mehrere solcher zweiten Sensoreinheiten entlang der Roboterfahrzeugfront oder entlang mindestens einer Roboterfahrzeuglängsseite angeordnet sein können.

Von besonderem Vorteil ist eine Ausführungsform, gemäß der die zweite Sensoreinheit derart angeordnet ist, dass mit ihr der seitlich, d.h. rechts und/oder links des Roboterfahrzeuges, befindliche, also der sich quer zur Fahrtrichtung erstreckende Untergrund analysierbar ist. Diese Ausführungsform ermöglicht es, bei entsprechend ausgebildeten Steuermitteln, das Roboterfahrzeug entlang einer Grenze zwischen zwei unterschiedlich beschaffenen Untergrundabschnitten zu verfahren, ohne dass das Roboterfahrzeug die Grenze überfahren muss. Somit ist es beispielsweise bei einem als Rasenmäher ausgebildeten Roboterfahrzeug möglich die Grenze zu einem neben dem Rasenmäher befindlichen Blumenbeet entlang zu fahren, ohne die Notwendigkeit, das sich der Rasenmäher bereichsweise auf dem Blumenbeet befinden muss, was der Fall wäre, wenn das Roboterfahrzeug ausschließlich Sensoren zur Analyse des Untergrundes unterhalb des Roboterfahrzeugs oder ausschließlich Sensoren zur Analyse des Untergrundes außerhalb der Umfangskontur des Roboterfahrzeugs aufweisen würde.

Ebenso ist es möglich zusätzlich oder alternativ zu der zuvor beschriebenen Ausführungsform mit einer zweiten Sensoreinheit zur Analyse des seitlich des Roboterfahrzeugs befindlichen Untergrundes mindestens eine zweite Sensoreinheit derart anzuordnen, dass mit ihr der Untergrund vor oder hinter dem Roboterfahrzeug analysierbar ist, insbesondere um zu verhindern, dass das Roboterfahrzeug gegen ein Hindernis fährt oder auf einen Untergrund auffährt, der nicht befahren werden darf.

In Weiterbildung der Erfindung ist mit Vorteil vorgesehen, dass die mindestens eine erste Sensoreinheit und die mindestens eine zweite Sensoreinheit unterhalb des Roboterfahrzeugs, also dem Untergrund gegenüberliegend, angeordnet sind. Dabei ist die erste Sensoreinheit bevorzugt derart angeordnet, dass sich der Sensorfleck unmittelbar unter der Sensoreinheit befindet, die Sensoreinheit also senkrecht zum Untergrund ausgerichtet ist. Die zweite Sensoreinheit, die sich ebenfalls mit Vorteil unterhalb des Roboterfahrzeugs befindet ist in der Regel schräg, d.h. winklig zum Untergrund angeordnet, so dass der Sensorfleck außerhalb der Roboterfahrzeugumfangskontur liegt. Die Anordnung der Sensoreinheiten, vorzugsweise sämtlicher Sensoreinheiten unterhalb des Roboterfahrzeugs hat den Vorteil, dass Fremdstrahlungseinflüsse auf die Messungen, insbesondere durch die Sonnenstrahlung minimiert werden, wodurch störungsfreie Messungen durchführbar sind.

Es hat sich als vorteilhaft herausgestellt, die mindestens eine erste Sensoreinheit und die mindestens eine zweite Sensoreinheit entlang einer quer zur Geradeausfahrrichtung des Roboterfahrzeugs verlaufenden Querachse anzuordnen, wobei bevorzugt ist, dass die Sensoreinheiten unmittelbar auf der Querachse nebeneinander angeordnet sind. Dabei ist es von Vorteil, wenn die zweite Sensoreinheit eine äußere Position und die erste Sensoreinheit eine innere Position einnimmt, um eine Grenze zwischen zwei unterschiedlich beschaffenen Untergrundabschnitten im Bereich der Roboterfahrzeugsumfangskontur, also im Grenzbereich des Untergrundes zur Projektionsfläche des Roboterfahrzeugs erkennen zu können.

Wie bereits erwähnt, sind die Steuermittel bevorzugt derart ausgebildet, dass diese anhand unterschiedlicher Signale der ersten und zweiten Sensoreinheit eine Grenze zwischen zwei unterschiedlich beschaffenen Untergrundabschnitten zwischen diesen beiden Sensoreinheiten erkennen und in Weiterbildung der Erfindung die Antriebsmittel des Roboterfahrzeugs derart ansteuern, dass das Roboterfahrzeug entlang dieser Grenze fährt, insbesondere derart, dass ein außerhalb der Grenze befindlicher Untergrundabschnitt nicht befahren wird.

Es liegt im Rahmen der Erfindung die Sensoreinheiten als passive Sensoreinheiten auszubilden, das Roboterfahrzeug also senderfrei auszubilden. Insbesondere wird als Strahlungsquelle die Sonne genutzt. Zur Erhöhung der Messgenauigkeit ist es jedoch von Vorteil, wenn zumindest eine der Sensoreinheiten, vorzugsweise einer Gruppe von Sensoreinheiten oder bevorzugt jeder Sensoreinheit mindestens ein Sender zum Aussenden mindestens eines Frequenzsignals zugeordnet ist, das an dem Untergrund reflektiert wird.

Von besonderem Vorteil ist eine Ausführungsform, bei der sowohl die erste Sensoreinheit als auch die zweite Sensoreinheit jeweils einen Infrarotsensor zum Erfassen einer von dem Untergrund reflektierten Infrarotstrahlung, insbesondere aus dem nahen Infrarotbereich und zusätzlich einen Sensor zum Erfassen einer von dem Untergrund reflektierten Lichtstrahlung, insbesondere aus dem sichtbaren Spektrum umfasst. Die Kombination dieser Sensoren erhöht die Entscheidungssicherheit durch eine Verknüpfung der Messergebnisse. Dabei wird die Erkenntnis ausgenutzt, dass Gras eine hohe Reflektivität in Bezug auf Infrarotstrahlung und eine vergleichsweise niedrige Reflektivität in Bezug auf sichtbares Licht, insbesondere aus dem grünen oder roten Spektrum hat.

Von besonderem Vorteil ist eine Ausführungsform, bei der das Roboterfahrzeug als Rasenmäher mit einem Mähwerk ausgebildet ist. Alternativ ist es beispielsweise möglich, dass es sich bei dem Roboterfahrzeug um einen Poolreinigungsroboter oder um einen autonom arbeitenden Staubsauger handelt.

Weitere Vorteile, Merkmale und Einzelheiten der Erfindung sind der nachfolgenden Beschreibung bevorzugter Ausführungsbeispiele sowie anhand der Zeichnungen; diese zeigen in:
- Fig. 1:: eine schematische Darstellung eines als Rasenmäher ausgebildeten Roboterfahrzeugs in einer Ansicht von unten,
- Fig. 2:: eine schematisierte Schnittansicht entlang der Schnittlinie A - A gemäß Fig. 1 und
- Fig. 3: eine schematische Darstellung eines als Rasenmäher ausgebildeten Roboterfahrzeugs bei seiner Fahrt seitlich an einer Grenze zwischen zwei unterschiedlich beschaffenen Untergrundabschnitten entlang.

In den Figuren sind gleiche Bauteile und Bauteile mit der gleichen Funktion mit den gleichen Bezugszeichen gekennzeichnet.

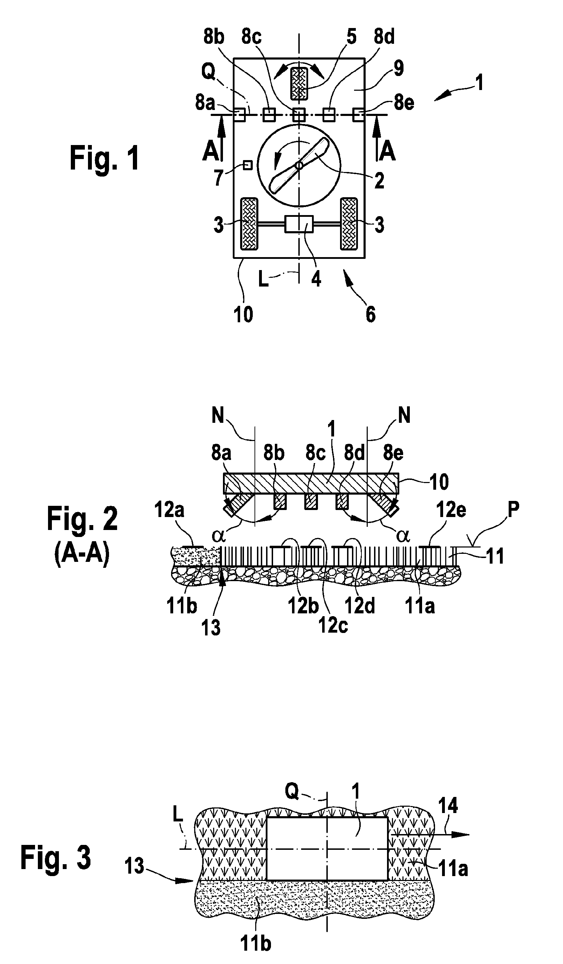

In Fig. 1 ist ein als Rasenmäher ausgebildetes Roboterfahrzeug 1 in einer Ansicht von unten gezeigt. Das Roboterfahrzeug 1 umfasst ein rotierbares Mähwerk 2, sowie zwei Antriebsräder 3, die mittels eines nur schematisch angedeuteten Antriebsmotors 4 antreibbar sind. Ferner umfasst das Roboterfahrzeug 1 ein drehbares, insbesondere lenkbares Rad 5, das in Bezug auf eine Längsmittelachse L des Roboterfahrzeugs axial von den Antriebsrädern 3 beabstandet ist. Die Antriebsräder 3, der Antriebsmotor 4 sowie das lenkbare Rad 5 sind Bestandteil von Antriebsmitteln 6 des Roboterfahrzeugs 1 zum Bewegen und Lenken des Roboterfahrzeugs 1. Wird auf ein lenkbares Rad verzichtet, kann eine Richtungsänderung auch durch unterschiedliche Drehzahlen der Antriebsräder 3 realisiert werden. In diesem Fall ist das Rad 5 bevorzugt drehbar bzw. verschwenkbar gelagert.

Ferner weist das Roboterfahrzeug 1 mindestens einen Mikroprozessor umfassende Steuermittel 7 auf, mit denen sowohl der Antriebsmotor 4 als auch das lenkbare Rad 5 der Antriebsmittel 6 ansteuerbar sind. Die Ansteuerung der Antriebsmittel 6 erfolgt auf Basis von Signalen, die den Steuermitteln 7 von Sensoreinheiten 8a bis 8e zugeleitet werden. Die Sensoreinheiten 8a bis 8e sind nebeneinander entlang einer senkrecht zur Längsmittelachse L verlaufenden Querachse Q des Roboterfahrzeugs 1 auf einer Roboterfahrzeugunterseite 9 angeordnet. Sämtliche Sensoreinheiten 8a bis 8e sind in diesem Ausführungsbeispiel identisch ausgebildet und umfassen jeweils einen Infrarotsensor (nicht gezeigt) zum Erfassen von Infrarotstrahlung (Frequenzsignal) sowie einen Lichtsensor (nicht gezeigt) zum Erfassen von Licht (Frequenzsignal) aus dem sichtbaren Spektrum. Jeder Sensoreinheit ist im gezeigten Ausführungsbeispiel jeweils ein nicht gezeigter Sender zum Aussenden von Infrarotstrahlung und sichtbarem Licht zugeordnet, wobei die Sender mit Vorteil weggelassen werden können.

Wie sich aus Fig. 2 ergibt, ist die Ausrichtung der identisch ausgebildeten Sensoreinheiten 8a bis 8e unterschiedlich. Bei den in der Zeichnungsebene äußeren Sensoreinheiten 8a und 8e handelt es sich um erste Sensoreinheiten zur Analyse des Untergrundes in einem Bereich außerhalb einer Roboterfahrzeugumfangskontur 10, also außerhalb einer Projektionsfläche P des Roboterfahrzeugs 1 auf dem Untergrund 11. Die ersten Sensoreinheiten 8a und 8e, bzw. deren Längsachsen schließen hierzu mit einer Normalen N auf den Untergrund 11 jeweils einen Winkel α von in diesem Ausführungsbeispiel etwa 45° ein. Dies führt dazu, dass die zu den Sensoreinheiten 8a und 8e gehörigen Sensorflecke 12a und 12e sich in einem Untergrundbereich außerhalb der Umfangskontur 10 des Roboterfahrzeugs 1 befinden. Bei den Sensorflecken 12a und 12e handelt es sich um den jeweiligen Erfassungsbereich der ersten Sensoreinheiten 8a und 8e, also den Bereich, aus dem die Sensoreinheiten 8a und 8e von an dem Untergrund 11 reflektierte Strahlung erfassen können.

Bei den auf der Querachse Q sowie zwischen den ersten, äußeren Sensoreinheiten 8a und 8e befindlichen Sensoren 8b bis 8d handelt es sich um zweite Sensoreinheiten, die zur Analyse des Untergrundes 11 unmittelbar unterhalb des Roboterfahrzeugs 1 ausgebildet und angeordnet sind. In dem gezeigten Ausführungsbeispiel sind diese zweiten Sensoreinheiten 8b bis 8d, bzw. deren Längsachsen parallel zur Normalen N ausgerichtet, so dass sich die Sensorflecke 12b bis 12d der Sensoreinheiten 8b bis 8d unmittelbar unterhalb der Sensoreinheiten 8b bis 8d und somit unmittelbar unterhalb des Roboterfahrzeugs 1 befinden.

Aus Fig. 2 ist ersichtlich, dass sich das Roboterfahrzeug 1 unmittelbar neben einer Grenze 13 zwischen zwei unterschiedlich beschaffenen Untergrundabschnitten 11a und 11b befindet, wobei es sich bei dem Untergrundabschnitt 11a um eine Rasenfläche und bei dem Untergrundabschnitt 11b um eine Sandfläche handelt. Durch die schräge Anordnung der ersten Sensoreinheit 8a und den damit außerhalb der Projektionsfläche P befindlichen Sensorfleck 12a kann von dem Steuermittel 7 die Grenze 13 zwischen den Untergrundabschnitten 11a und 11b erkannt werden, da von den Sensoreinheiten 8a, 8b, 8c, 8d unterschiedliche Intensitäten bzw. Intensitätsverhältnisse zwischen Infrarotstrahlung und Lichtstrahlung von an den Untergrundabschnitten 11b bzw. 11a reflektierter Strahlung erfasst werden. Die Steuermittel 7 können auf Basis dieser Information das Roboterfahrzeug 1, wie in Fig. 3 gezeigt in Pfeilrichtung 14 entlang der Grenze 13 verfahren, ohne dass das Roboterfahrzeug 1 innerhalb des als Sandfläche ausgebildeten Untergrundabschnittes 11b verfährt.

## Patentansprüche

1. Für einen selbstständigen Betrieb ausgebildetes Roboterfahrzeug (1), mit Antriebsmitteln (6) zum Lenken und Bewegen des Roboterfahrzeugs (1) auf einem Untergrund (11) und mit Steuermitteln (7) zum Ansteuern der Antriebsmittel (6) in Abhängigkeit von Signalen mindestens einer ersten Sensoreinheit (8a, 8e) und mindestens einer zweiten Sensoreinheit (8b bis 8d), wobei die erste Sensoreinheit (8a, 8e) zum Empfangen mindestens eines von dem unterhalb des Roboterfahrzeugs (1) befindlichem Untergrund (11) reflektierten ersten Frequenzsignals ausgebildet und angeordnet ist,
**dadurch gekennzeichnet,**
**dass** die zweite Sensoreinheit (8b bis 8d) zum Empfangen mindestens eines zweiten Frequenzsignals ausgebildet und angeordnet ist, das von außerhalb der Roboterfahrzeugumfangskontur (10) befindlichem Untergrund (11) reflektiert wird.

2. Roboterfahrzeug nach Anspruch 1,
**dadurch gekennzeichnet,**
**dass** die zweite Sensoreinheit (8b bis 8d) zum Empfangen mindestens eines zweiten Frequenzsignals ausgebildet und angeordnet ist, das von einem seitlich des Roboterfahrzeugs (1) befindlichem Untergrund (11) reflektiert wird.

3. Roboterfahrzeug nach einem der Ansprüche 1 oder 2,
**dadurch gekennzeichnet,**
**dass** die zweite Sensoreinheit (8b bis 8d) zum Empfangen mindestens eines zweiten Frequenzsignals ausgebildet und angeordnet ist, das von einem vor oder hinter dem Roboterfahrzeug (1) befindlichem Untergrund (11) reflektiert wird.

4. Roboterfahrzeug nach einem der vorhergehenden Ansprüche,
**dadurch gekennzeichnet,**
**dass** die Sensoreinheiten (8a bis 8e) an der Unterseite (9) des Roboterfahrzeugs (1) angeordnet sind.

5. Roboterfahrzeug nach einem der vorhergehenden Ansprüche,
**dadurch gekennzeichnet,**
**dass** die Sensoreinheiten (8a bis 8e) entlang mindestens einer quer zur Geradeausfahrtrichtung des Roboterfahrzeugs (1) verlaufenden Querachse (Q) und/oder entlang mindestens einer in Geradeausfahrtrichtung verlaufender Längsachse (L) angeordnet sind.

6. Roboterfahrzeug nach Anspruch 5,
**dadurch gekennzeichnet,**
**dass** die Sensoreinheiten (8a bis 8e) auf der Querachse (Q) und/oder der Längsachse (L) nebeneinander angeordnet sind.

7. Roboterfahrzeug nach einem der vorgehenden Ansprüche,
**dadurch gekennzeichnet,**
**dass** die Steuermittel (7) anhand unterschiedlicher Signale der ersten und der zweiten Sensoreinheit (8a bis 8e) eine zwischen den beiden Sensoreinheiten (8a bis 8e) gelegene Grenze (13), insbesondere eine Grenzlinie, zwischen zwei unterschiedlich beschaffenen Untergrundabschnitten (11a, 11b) erkennend ausgebildet sind.

8. Roboterfahrzeug nach einem der vorhergehenden Ansprüche,
**dadurch gekennzeichnet,**
**dass** die Steuermittel (7) die Antriebsmittel (6) derart ansteuernd ausgebildet sind, dass das Roboterfahrzeug (1) entlang der Grenze (13) fährt.

9. Roboterfahrzeug nach einem der vorhergehenden Ansprüche,
**dadurch gekennzeichnet,**
**dass** zumindest einer der Sensoreinheiten (8a bis 8e), vorzugsweise einer Gruppe von Sensoreinheiten, insbesondere jeder Sensoreinheit (8a bis 8e) mindestens ein Sender zum Aussenden mindestens eines Frequenzsignals zugeordnet ist.

10. Roboterfahrzeug nach einem der vorhergehenden Ansprüche,
**dadurch gekennzeichnet,**
**dass** mindestens eine der Sensoreinheiten (8a bis 8e) mindestens zwei, insbesondere unterschiedliche Sensoren zum Erfassen unterschiedlicher Frequenzsignale, umfasst.

11. Roboterfahrzeug nach Anspruch 10,
**dadurch gekennzeichnet,**
**dass** mindestens einer der Sensoren als Infrarotsensor zum Erfassen einer von dem Untergrund (11) reflektierten Infrarotstrahlung und mindestens einer der Sensoren als Lichtsensor um Erfassen einer von dem Untergrund (11) reflektierten Lichtstrahlung aus dem sichtbaren Spektrum ausgebildet ist.

12. Roboterfahrzeug nach einem der vorhergehenden Ansprüche,
**dadurch gekennzeichnet,**
**dass** das Roboterfahrzeug (1) als Rasenmäher mit einem Mähwerk (2) ausgebildet ist.
